# EUROPEAN PATENT APPLICATION

(11) **EP 4 708 673 A1**
(43) Date of publication of application: **11.03.2026**
(21) Application number: 25174938.8
(22) Date of filing: 08.05.2025
(51) Int. Cl.: H02S 50/00

(54) **INVERTER AND PRIMARY CONTROLLER OF PHOTOVOLTAIC POWER GENERATION SYSTEM, AND METHOD OF OPERATING PHOTOVOLTAIC POWER GENERATION SYSTEM**

(30) Priority: 05.09.2024 KR 20240120909
(71) Applicant: Hanwha Solutions Corporation, Jung-gu Seoul 04541 (KR)
(72) Inventor: PARK, Dong Il, 04541 Seoul (KR); NOH, Hong Il, 04541 Seoul (KR); HONG, Da Hyun, 04541 Seoul (KR); KIM, Hyun Gon, 04541 Seoul (KR)
(74) Representative: Mooser, Sebastian Thomas

(57) **Abstract**

Provided are an inverter and a primary controller of a photovoltaic power generation system, and a method of operating the photovoltaic power generation system. The method of operating a photovoltaic power generation system may include assigning identification information to each of a plurality of module-level power electronics (MLPEs) connected to a plurality of photovoltaic panels, based on a registration request from each of the plurality of MLPEs, monitoring the plurality of MLPEs and determining whether an error has occurred in the plurality of MLPEs based on a result of the monitoring, and marking an error flag on the identification information of at least one MLPE among the plurality of MLPEs when it is determined that the error has occurred in the at least one MLPE.

## Description

### BACKGROUND

### 1. Field

The present disclosure relates to an inverter and a primary controller of a photovoltaic power generation system, and a method of operating the photovoltaic power generation system, which facilitate replacement management of module-level power electronics (MLPEs) connected to photovoltaic panels.

### 2. Description of the Related Art

Photovoltaic power generation systems may include module-level power electronics (hereinafter, referred to as MLPE) attached to photovoltaic panels and a primary controller.

The MLPE transmits monitoring information, including the power generation amount, temperature, and the like of the photovoltaic panel, to the primary controller, thereby allowing the primary controller to identify power generation states.

When an error occurs in the MLPE, the MLPE is replaced. At this time, in order for the primary controller to recognize a replaced new MLPE, an administrator needs to manually delete information on the MLPE in which the error occurred from the primary controller and input information on the new MLPE, which causes inconvenience.

### SUMMARY

An object of the present disclosure is, when an error occurs in at least one of a plurality of registered module-level power electronics (MLPEs) (or photovoltaic panels), to mark identification information of the MLPE, in which the error occurs, with an error flag, and to assign the identification information, marked with the error flag, as identification information of a new MLPE upon receiving a signal (e.g., a registration request, or unique information of the new MLPE) from the new MLPE, thereby automatically registering the new MLPE.

An object of the present disclosure is to generate and output a replacement notification when an error frequently occurs in at least one of a plurality of registered MLPEs (or photovoltaic panels), thereby allowing an administrator to easily recognize a replacement timing.

According to an aspect of the present disclosure, there is provided a method of operating a photovoltaic power generation system, the method including assigning identification information to each of a plurality of module-level power electronics (MLPEs) connected to a plurality of photovoltaic panels, based on a registration request from each of the plurality of MLPEs, monitoring the plurality of MLPEs and determining whether an error has occurred in the plurality of MLPEs based on a result of the monitoring, and marking an error flag on the identification information of at least one MLPE among the plurality of MLPEs when it is determined that the error has occurred in the at least one MLPE.

In the present disclosure, the determining of whether the error has occurred in the plurality of MLPEs may include periodically receiving monitoring information from each of the plurality of MLPEs, and determining that the error has occurred in the at least one MLPE from which the monitoring information has not been received for a first set number of times or more.

In the present disclosure, the method may further include periodically requesting the monitoring information from the at least one MLPE in which the error has occurred, and removing the error flag marked on the identification information of the at least one MLPE in which the error has occurred, when the monitoring information has been received from the at least one MLPE in which the error has occurred for a second set number of times or more.

In the present disclosure, the determining of whether the error has occurred in the plurality of MLPEs may include periodically receiving monitoring information from each of the plurality of MLPEs, the monitoring information including unique information of each MLPE along with at least one measured value among a voltage, a current, a power generation amount, and a temperature of each of the plurality of photovoltaic panels, and determining that the error has occurred in the at least one MLPE associated with the measured value, when the measured value deviates from a preset range.

In the present disclosure, the method may further include counting an error history in association with the identification information of the at least one MLPE in which the error has occurred, and generating and outputting a replacement notification for the at least one MLPE in which the error has occurred when the error history exceeds a set value.

In the present disclosure, the method may further include assigning the identification information of the at least one MLPE marked with the error flag as identification information of a new MLPE when a registration request is received from the new MLPE.

According to another aspect of the present disclosure, there is provided a primary controller of a photovoltaic power generation system, the primary controller including a communication unit configured to receive a registration request from each of a plurality of module-level power electronics (MLPEs) connected to a plurality of photovoltaic panels, a processor configured to assign identification information to each of the plurality of MLPEs based on the registration request, determine whether an error has occurred in the plurality of MLPEs based on a result of monitoring the plurality of MLPEs, and mark an error flag on the identification information of at least one MLPE among the plurality of MLPEs when it is determined that the error has occurred in the at least one MLPE.

In the present disclosure, the processor may be further configured to periodically receive, through the communication unit, monitoring information from each of the plurality of MLPEs, and determine that the error has occurred in the at least one MLPE from which the monitoring information has not been received for a first set number of times or more.

In the present disclosure, the processor may be further configured to periodically request, through the communication unit, the monitoring information from the at least one MLPE in which the error has occurred, and to remove the error flag marked on the identification information of the at least one MLPE in which the error has occurred when the monitoring information has been received from the at least one MLPE in which the error has occurred for a second set number of times or more.

In the present disclosure, the processor may be further configured to periodically receive, through the communication unit, monitoring information from each of the plurality of MLPEs, the monitoring information including unique information of each MLPE and at least one measured value among a voltage, a current, a power generation amount, and a temperature of each of the plurality of photovoltaic panels, and to determine that the error has occurred in the at least one MLPE associated with the measured value when the measured value deviates from a preset range.

In the present disclosure, the processor may be further configured to count an error history in association with the identification information of the at least one MLPE in which the error has occurred, and to generate and output a replacement notification for the at least one MLPE in which the error has occurred when the error history exceeds a set value.

In the present disclosure, the processor may be further configured to assign the identification information of the at least one MLPE marked with the error flag as identification information of a new MLPE when a registration request is received from the new MLPE.

According to another aspect of the present disclosure, there is provided an inverter of a photovoltaic power generation system, the inverter including a processor, and a memory operably connected to the processor and configured to store at least one code executed by the processor, wherein the processor is configured to receive a registration request from each of a plurality of module-level power electronics (MLPEs) connected to a plurality of photovoltaic panels, assign identification information to each of the plurality of MLPEs based on the registration request, determine whether an error has occurred in the plurality of MLPEs based on a result of monitoring the plurality of MLPEs, and mark an error flag on the identification information of at least one MLPE among the plurality of MLPEs when it is determined that the error has occurred in the at least one MLPE.

In the present disclosure, the processor may be further configured to periodically receive monitoring information from each of the plurality of MLPEs, and determine that the error has occurred in the at least one MLPE from which the monitoring information has not been received for a first set number of times or more.

In the present disclosure, the processor may be further configured to periodically request the monitoring information from the at least one MLPE in which the error has occurred, and to remove the error flag marked on the identification information of the at least one MLPE in which the error has occurred when the monitoring information has been received from the at least one MLPE in which the error has occurred for a second set number of times or more.

In the present disclosure, the processor may be further configured to periodically receive monitoring information from each of the plurality of MLPEs, the monitoring information including unique information of each MLPE and at least one measured value among a voltage, a current, a power generation amount, and a temperature of each of the plurality of photovoltaic panels, and to determine that the error has occurred in the at least one MLPE associated with the measured value when the measured value deviates from a preset range.

In the present disclosure, the processor may be further configured to count an error history in association with the identification information of the at least one MLPE in which the error has occurred, and to generate and output a replacement notification for the at least one MLPE in which the error has occurred when the error history exceeds a set value.

In the present disclosure, the processor may be further configured to assign the identification information of the at least one MLPE marked with the error flag as identification information of a new MLPE when a registration request is received from the new MLPE.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a configuration diagram illustrating an example of a photovoltaic power generation system according to an embodiment of the present disclosure;
FIG. 2 is a configuration diagram illustrating another example of a photovoltaic power generation system according to an embodiment of the present disclosure;
FIG. 3 is a configuration diagram illustrating an example of a primary controller included in the photovoltaic power generation system according to an embodiment of the present disclosure;
FIGS. 4 and 5 are drawings for describing examples of operation of the photovoltaic power generation system according to an embodiment of the present disclosure;
FIG. 6 is a diagram illustrating an example of marking an error flag in the photovoltaic power generation system according to an embodiment of the present disclosure;
FIG. 7 is a flowchart for describing a method of operating the photovoltaic power generation system according to an embodiment of the present disclosure; and
FIG. 8 is a diagram referenced to describe a power supply structure of a building in which photovoltaic panels of a photovoltaic power generation system according to an embodiment of the present disclosure are installed.

### DETAILED DESCRIPTION

The terms used in the embodiments have been selected from general terms that are currently widely used when possible but may vary according to an intention of those of ordinary skill in the art, precedents, or the emergence of new technologies. In addition, the applicant may arbitrarily select terms in a particular case, and in this case, the meaning of the terms will be described in detail in the corresponding part. Accordingly, the terms used herein should be defined on the basis of the meaning of the terms and the content throughout the specification, instead of the names of the terms.

Throughout the specification, when a part is referred to "include" a certain component, it means that it may further include other components rather than exclude other components, unless specifically indicates otherwise.

In addition, terms including ordinal numbers such as "first" or "second" used herein may be used to describe various components, but the components are not limited by the terms, and the terms are used only for the purpose of distinguishing one component from another. The above terms may only be used to distinguish one component from another.

Hereinafter, embodiments will be described in detail with reference to the accompanying drawings. However, the embodiments may be implemented in several different forms and are not limited to embodiments that will be described below.

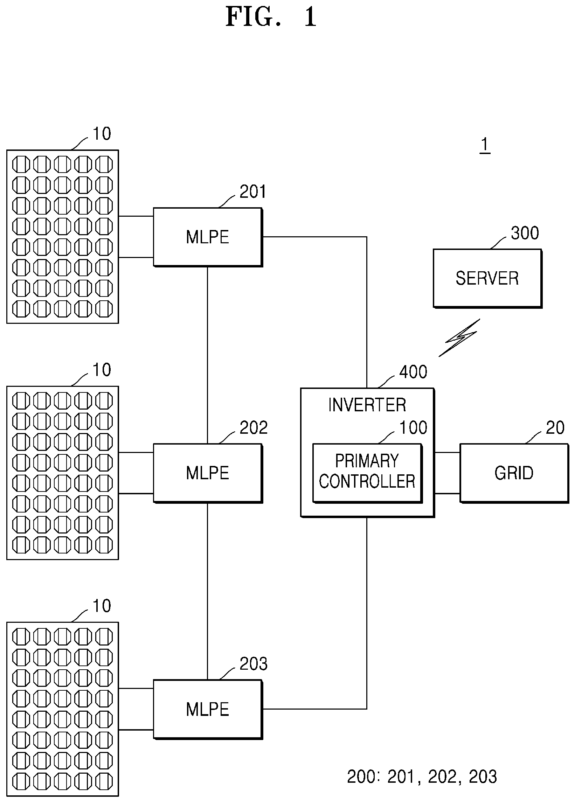

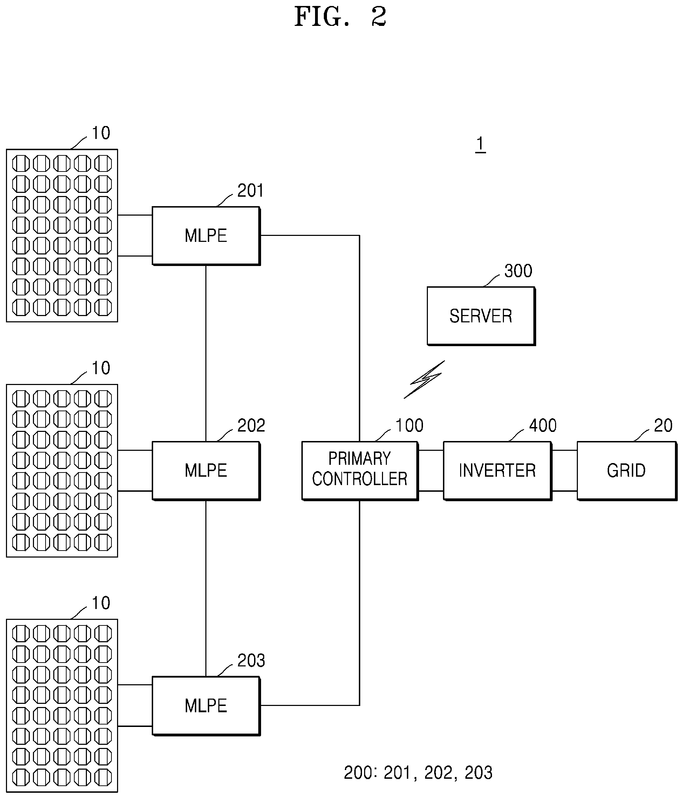

FIG. 1 is a configuration diagram illustrating an example of a photovoltaic power generation system according to an embodiment of the present disclosure, and FIG. 2 is a configuration diagram illustrating another example of a photovoltaic power generation system according to an embodiment of the present disclosure.

As illustrated in FIG. 1, a photovoltaic power generation system 1 according to an embodiment of the present disclosure may include a plurality of photovoltaic panels 10, an inverter 400 including a primary controller 100, a plurality of module-level power electronics (MLPEs) 200, and a server 300. Alternatively, as illustrated in FIG. 2, a photovoltaic power generation system according to another embodiment of the present disclosure may include the plurality of photovoltaic panels 10, the primary controller 100, the plurality of MLPEs 200, the inverter 400, and the server 300.

That is, as shown in FIG. 1, the photovoltaic power generation system according to an embodiment may be configured such that the inverter 400 includes the primary controller 100, and alternatively, according to another embodiment, as shown in FIG. 2, the photovoltaic power generation system may be configured such that the inverter 400 is disposed between the primary controller 100 and a grid 20. Here, the inverter 400 may convert direct current (DC) power generated by the plurality of photovoltaic panels 10 into alternating current (AC) power and transmit the converted AC power to the grid 20.

Hereinafter, for convenience of description, an embodiment in which the primary controller 100 is included in the inverter 400, as shown in FIG. 1, will be described as an example. Further, in the following description, the plurality of photovoltaic panels 10 and the plurality of MLPEs 200 will be collectively described, but, the photovoltaic panels 10 and the MLPEs 200 may be separate from each other and may be configured as different types or models.

According to an embodiment, each of the plurality of photovoltaic panels 10 may refer to a photovoltaic power generation panel in a module unit. Further, the plurality of photovoltaic panels 10 may be connected in at least one of a series connection and a parallel connection, and each of the plurality of MLPEs 200 may be provided for each of the plurality of photovoltaic panels 10. Further, one MLPE 200 may be connected to one photovoltaic panel 10, or one MLPE 200 may also be connected to the plurality of photovoltaic panels 10.

In an embodiment, the MLPE 200 may transmit monitoring information, including at least one of the voltage, current, power generation amount, temperature, and fault information of the photovoltaic panel 10, along with unique information (e.g., a serial number) of the MLPE 200, to the primary controller 100, and may receive an operation signal for optimizing power efficiency from the primary controller 100.

According to an embodiment of the present disclosure, the MLPE 200 is a component connected to the respective photovoltaic panel 10 and configured to optimize output power (output voltage) of the connected photovoltaic panel 10.

At this time, as shown in FIG. 1, the MLPE 200 may be connected to the photovoltaic panel 10 in a one-to-one correspondence, but, depending on a structure adopted by the photovoltaic power generation system 1, the MLPEs 200 may be installed in a many-to-one or many-to-many configuration, and the installation form is not limited to any particular configuration.

According to an embodiment of the present disclosure, the plurality of MLPEs 200 may be provided and connected in series with each other, and the inverter 400 or the primary controller 100 may be connected to opposite ends of the plurality of series-connected MLPEs 200.

According to an embodiment of the present disclosure, the inverter 400 is a component mounted in a power conversion system (PCS) and configured to perform power conversion to supply power generated by the photovoltaic panels 10 to a load or a grid. As described above, as shown in FIG. 1, the inverter 400 may include the primary controller 100, or as shown in FIG. 2, the inverter 400 may be provided separately from the primary controller 100. In the following description, for convenience of description, an embodiment in which the inverter 400 includes the primary controller 100, as shown in FIG. 1, will be described as a reference, and an operation of the inverter 400 may be understood as an operation of the primary controller 100.

According to an embodiment of the present disclosure, the inverter 400 may identify a maximum power point voltage by performing a maximum power point tracking (MPPT) operation to track the power and voltage at which the photovoltaic power generation system 1 generates maximum power. The MPPT operation is an algorithm implemented to continuously adjust an impedance applied to the photovoltaic panel 10 or an array composed of the plurality of photovoltaic panels 10, so that the photovoltaic power generation system 1 operates near a maximum power point when conditions such as solar irradiance, ambient temperature, and load change. According to an embodiment of the present disclosure, the inverter 400 may control the MLPE 200 to perform the MPPT operation, thereby maximizing power generation efficiency of the photovoltaic power generation system 1. Further, the inverter 400 may monitor an operating status by analyzing various types of data received from the photovoltaic panel 10, the MLPE 200, a load, a grid, and the like.

In an embodiment, the primary controller 100 may output monitoring information received from the plurality of MLPEs 200 or transmit the monitoring information to a server 300 (or an administrator terminal), thereby allowing an administrator to recognize the status of each of the plurality of MLPEs 200. Here, information transmission and reception between the primary controller 100 and the server 300 may be performed in a wired or wireless manner.

Information transmission and reception between the plurality of MLPEs 200 and the primary controller 100 may be performed by a power line communication (PLC) method. When power line communication is used, separate communication cables or wireless communication technologies are not required for the information transmission and reception between the plurality of MLPEs 200 and the primary controller 100, thereby facilitating installation and maintenance of the photovoltaic power generation system 1.

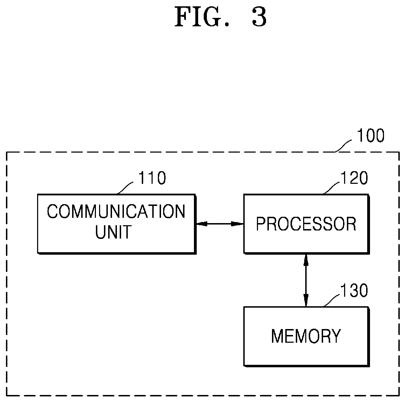

FIG. 3 is a configuration diagram illustrating an example of the primary controller included in the photovoltaic power generation system according to an embodiment of the present disclosure.

Referring to FIG. 3, the primary controller 100 may include a communication unit 110, a processor 120, and a memory 130.

The communication unit 110 may communicate with the plurality of MLPEs connected to the plurality of photovoltaic panels or communicate with the server (or the administrator terminal).

In an embodiment, the communication unit 110 may receive registration requests from the plurality of MLPEs connected to the plurality of photovoltaic panels.

Further, the communication unit 110 may periodically receive monitoring information along with unique information of each MLPE from the plurality of MLPEs. Here, the monitoring information may include at least one measured value among the voltage, current, power generation amount, and temperature of the photovoltaic panel.

The processor 120 may assign identification information to each of the plurality of MLPEs based on the registration requests, and may determine whether an error has occurred in each of the plurality of MLPEs based on monitoring results for the plurality of MLPEs. In an embodiment, the processor 120 may determine that an error has occurred in the MLPE from which the monitoring information has not been received through the communication unit 110 for a first set number of times or more. In another embodiment, when a measured value (such as the voltage, current, power generation amount, and temperature of the photovoltaic panel) in the monitoring information received through the communication unit 110 deviates from a preset range, the processor 120 may determine that an error has occurred in the MLPE associated with the measured value.

When it is determined that an error has occurred in the at least one MLPE among the plurality of MLPEs, the processor 120 may mark an error flag on the identification information of the MLPE in which the error occurred.

The processor 120 may periodically request monitoring information from the MLPE, in which the error has occurred, through the communication unit 110, and may remove the error flag marked on the identification information of the MLPE, in which the error has occurred, when the monitoring information has been received from the MLPE, in which the error has occurred, for a second set number of times or more.

In an embodiment, the processor 120 may count error history in association with the identification information of the MLPE in which the error has occurred, and when the error history exceeds a set value, the processor 120 may generate and output a replacement notification for the MLPE in which the error has occurred or transmit the replacement notification to the server (or the administrator terminal), thereby allowing the administrator to easily recognize the timing for replacing the MLPE.

The processor 120 may assign the identification information of the MLPE marked with the error flag as identification information of a new MLPE when a registration request is received from the new MLPE.

According to an embodiment, the processor 120 may be implemented as an array of a plurality of logic gates, or may be implemented as a combination of a general-purpose microprocessor and a memory in which a program executable by the microprocessor is stored. For example, the processor 120 may include a general purpose processor, a central processing unit (CPU), a microprocessor, a digital signal processor (DSP), a controller, a microcontroller, a state machine, or the like. In some environments, the processor 120 may include an application-specific integrated circuit (ASIC), a programmable logic device (PLD), a field programmable gate array (FPGA), or the like. For example, the processor 120 may refer to a combination of processing devices, e.g., a combination of a DSP and a microprocessor, a plurality of microprocessors, one or more microprocessors in conjunction with a DSP core, or any other combination of such configurations.

The memory 130 is hardware that stores various types of data processed within the primary controller 100, is operably connected to the processor 120, and may store a program for processing and control by the processor 120.

The memory 130 may include a random access memory (RAM) such as a dynamic random access memory (DRAM), a static random access memory (SRAM), or the like, a read-only memory (ROM), an electrically erasable programmable read-only memory (EEPROM), a compact disk ROM (CD-ROM), Blu-ray or other optical disk storage, a hard disk drive (HDD), a solid state drive (SSD), or a flash memory.

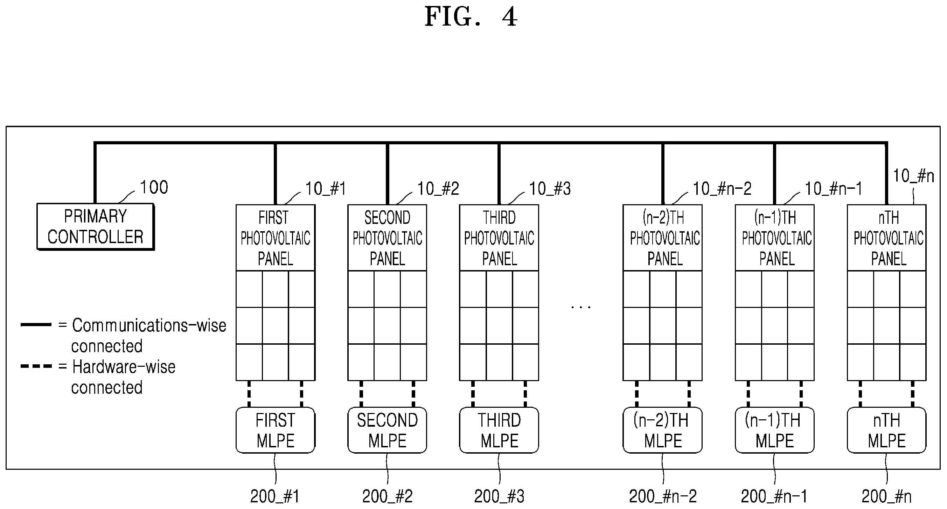

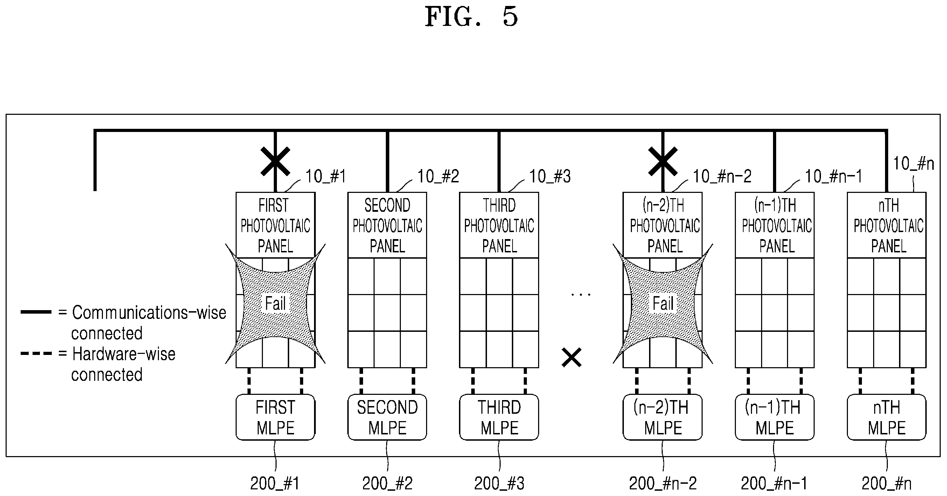

FIGS. 4 and 5 are drawings for describing examples of operation of the photovoltaic power generation system according to an embodiment of the present disclosure.

Referring to FIG. 4, as a registration request is received from each of n MLPEs, i.e., first to nth MLPEs 200_#1 to 200_#n, connected to n photovoltaic panels, i.e., first to nth photovoltaic panels 10_#1 to 10_#n, the primary controller 100 may assign identification information to each of the n MLPEs 200_#1 to 200_#n. Here, the n MLPEs 200_#1 to 200_#n may be, for example, connected to the n photovoltaic panels 10_#1 to 10_#n via a wired connection and connected to the primary controller 100 via a wireless connection.

In an embodiment, the primary controller 100 may assign the identification information to each of the n MLPEs 200_#1 to 200_#n randomly or based on an order in which registration requests are received. The photovoltaic power generation system may extract unique information of the MLPE from the registration requests and store the identification information assigned to the MLPE in the memory in association with the unique information of the MLPE.

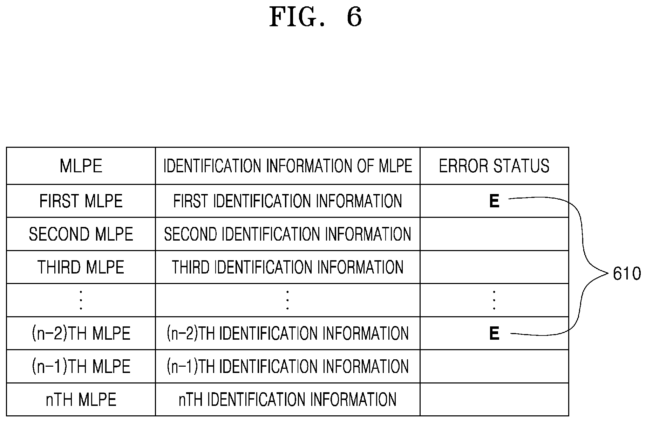

The primary controller 100 may monitor the first to nth MLPEs 200_#1 to 200_#n, and, as shown in FIG. 5, when it is determined based on a monitoring result that an error has occurred in the first MLPE 200_#1 and the (n-2)th MLPE 200_#n-2 (or the first photovoltaic panel and the (n-2)th photovoltaic panel), the primary controller 100 may mark an error flag on first identification information assigned to the first MLPE 200_#1 and mark an error flag on (n-2)th identification information assigned to the (n-2)th MLPE 200_#n-2. Here, the error flag may be, for example, a character, a symbol, or the like that indicates an error. In an embodiment, as shown in FIG. 6, the primary controller 100 may mark an error flag by recording the character "E" 610 in the memory in association with each of the first identification information of the first MLPE 200_#1 and the (n-2)th identification information of the (n-2)th MLPE 200_#n-2.

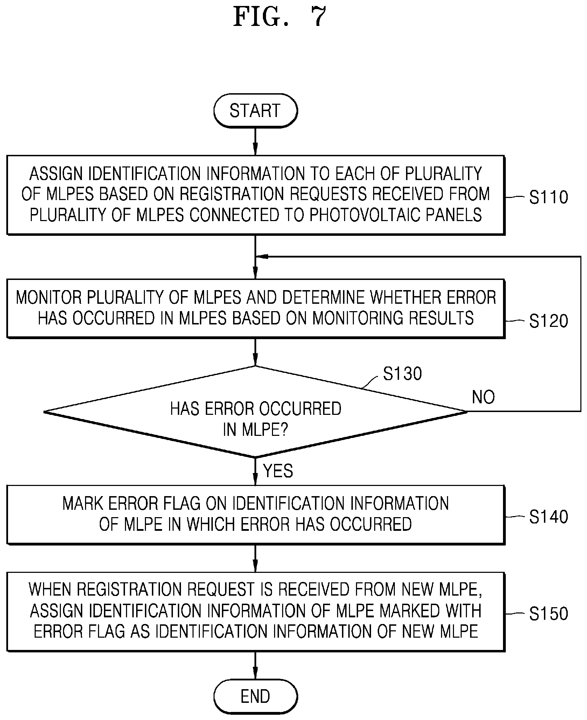

FIG. 7 is a flowchart for describing a method of operating the photovoltaic power generation system according to an embodiment of the present disclosure. Here, the method of operating the photovoltaic power generation system may be performed by the primary controller (or the inverter) of the photovoltaic power generation system.

Referring to FIG. 7, in operation S110, the primary controller may assign identification information to each of the plurality of MLPEs based on registration requests from the plurality of MLPEs connected to the plurality of photovoltaic panels.

In operation S120, the primary controller may monitor the plurality of MLPEs and determine whether an error has occurred in the plurality of MLPEs based on monitoring results.

In an embodiment, the primary controller may periodically receive monitoring information from each of the plurality of MLPEs, and may determine that an error has occurred in the MLPE from which the monitoring information has not been received for a first set number of times or more.

In another embodiment, the primary controller may periodically receive monitoring information from each of the plurality of MLPEs, the monitoring information including unique information of each MLPE and at least one measured value among the voltage, current, power generation amount, and temperature of the photovoltaic panel. The primary controller may determine that an error has occurred in the MLPE associated with the measured value when the measured value deviates from a preset range.

In operation S130, when it is determined that an error has occurred in at least one MLPE among the plurality of MLPEs, the primary controller may mark an error flag on the identification information of the MLPE, in which the error has occurred, in operation S140.

When it is determined that an error has not occurred in at least one MLPE among the plurality of MLPEs in operation S130, the primary controller may proceed to operation S120 and monitor the plurality of MLPEs.

In an embodiment, the primary controller may periodically request monitoring information from the MLPE in which the error has occurred, and when the monitoring information has been received from the MLPE, in which the error has occurred, for a second set number of times or more, the primary controller may remove the error flag marked on the identification information of the MLPE in which the error has occurred.

The primary controller may count error history in association with the identification information of the MLPE in which the error has occurred, and may generate and output a replacement notification for the MLPE, in which the error has occurred, when the error history exceeds a set value.

In operation S150, the primary controller may assign the identification information of the MLPE marked with the error flag as identification information of a new MLPE when a registration request is received from the new MLPE.

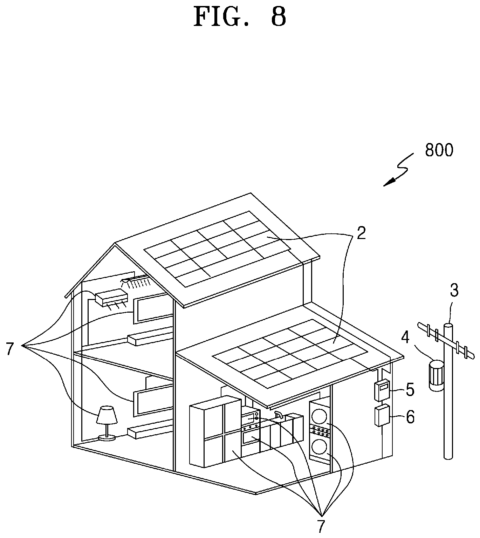

FIG. 8 is a diagram referenced to describe a power supply structure of a building in which photovoltaic panels of a photovoltaic power generation system according to an embodiment of the present disclosure are installed.

Referring to FIG. 8, a photovoltaic panel (or photovoltaic module) 2 may be installed on a roof of a building 800 and generate energy.

A photovoltaic inverter (or primary controller) 6 may convert the energy generated by the photovoltaic panel 2 and supply generated power into the building 800.

In an embodiment, a commercial power supplied through a utility pole 3 may be provided to the building through a transformer 4.

A plurality of home appliances 7 may operate by selectively receiving at least one of the commercial power and the power generated by the photovoltaic panel 2. A power meter 5 may measure an amount of power consumed in the building 800.

Further, when a separate energy storage system (ESS) is provided, the energy generated by the photovoltaic panel 2 may be stored in the ESS.

When a plurality of photovoltaic panels 2 are connected, a photovoltaic module string may be formed. The photovoltaic module string is an assembly of a plurality of photovoltaic modules and may include a single output terminal.

In an embodiment, the photovoltaic panel 2 may include or be connected to an MLPE.

The MLPE may control power conversion on a photovoltaic module basis and may include an optimizer to optimize generated energy. The MLPE may include a monitoring function to monitor a state or a power generation amount of the photovoltaic panel 2 and to transmit data to an external device.

Further, the MLPE may include a rapid shutdown (RSD) function to stop the operation of the photovoltaic panel 2 according to a degree of a fault.

The photovoltaic panel 2 may include a monitoring device configured to monitor a state or a power generation amount of the photovoltaic panel 2, or a rapid shutdown device (RSD) configured to perform a rapid shutdown function.

Further, at least one of the plurality of photovoltaic panels and the MLPE may include a communication module for power line communication.

According to an embodiment of the present disclosure, when an error occurs in at least one MLPE (or photovoltaic panel) among a plurality of registered MLPEs, an error flag may be marked on identification information of the MLPE in which the error has occurred. When a signal (e.g., a registration request, or unique information of a new MLPE) is received from the new MLPE, the identification information of the MLPE marked with the error flag may be assigned as identification information of the new MLPE, thereby automatically registering the new MLPE. As a result, the plurality of MLPEs may be easily managed using predetermined identification information, thereby eliminating the need for an administrator to manually register each new MLPE.

Further, according to an embodiment of the present disclosure, when an error frequently occurs in at least one MLPE (or photovoltaic panel) among a plurality of registered MLPEs, a replacement notification may be generated and output, thereby allowing an administrator to easily recognize a replacement timing.

According to an embodiment of the present disclosure, when an error occurs in at least one MLPE (or photovoltaic panel) among a plurality of registered MLPEs, the plurality of MLPEs can be easily managed.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the spirit and scope as defined by the following claims.

## Claims

1. A method of operating a photovoltaic power generation system, the method comprising:
assigning identification information to each of a plurality of module-level power electronics (MLPEs) connected to a plurality of photovoltaic panels, based on a registration request from each of the plurality of MLPEs;
monitoring the plurality of MLPEs and determining whether an error has occurred in the plurality of MLPEs based on a result of the monitoring; and
marking an error flag on the identification information of at least one MLPE among the plurality of MLPEs when it is determined that the error has occurred in the at least one MLPE.

2. The method of claim 1, wherein the determining of whether the error has occurred in the plurality of MLPEs includes periodically receiving monitoring information from each of the plurality of MLPEs, and determining that the error has occurred in the at least one MLPE from which the monitoring information has not been received for a first set number of times or more.

3. The method of claim 2, further comprising:
periodically requesting the monitoring information from the at least one MLPE in which the error has occurred; and
removing the error flag marked on the identification information of the at least one MLPE in which the error has occurred, when the monitoring information has been received from the at least one MLPE in which the error has occurred for a second set number of times or more.

4. The method of claim 1, wherein the determining of whether the error has occurred in the plurality of MLPEs includes:
periodically receiving monitoring information from each of the plurality of MLPEs, the monitoring information including unique information of each MLPE along with at least one measured value among a voltage, a current, a power generation amount, and a temperature of each of the plurality of photovoltaic panels; and
determining that the error has occurred in the at least one MLPE associated with the measured value, when the measured value deviates from a preset range.

5. The method of claim 1, further comprising:
counting an error history in association with the identification information of the at least one MLPE in which the error has occurred; and
generating and outputting a replacement notification for the at least one MLPE in which the error has occurred when the error history exceeds a set value.

6. The method of claim 1, further comprising assigning the identification information of the at least one MLPE marked with the error flag as identification information of a new MLPE when a registration request is received from the new MLPE.

7. A primary controller of a photovoltaic power generation system, the primary controller comprising:
a communication unit configured to receive a registration request from each of a plurality of module-level power electronics (MLPEs) connected to a plurality of photovoltaic panels;
a processor configured to assign identification information to each of the plurality of MLPEs based on the registration request, determine whether an error has occurred in the plurality of MLPEs based on a result of monitoring the plurality of MLPEs, and mark an error flag on the identification information of at least one MLPE among the plurality of MLPEs when it is determined that the error has occurred in the at least one MLPE.

8. The primary controller of claim 7, wherein the processor is further configured to periodically receive, through the communication unit, monitoring information from each of the plurality of MLPEs, and determine that the error has occurred in the at least one MLPE from which the monitoring information has not been received for a first set number of times or more.

9. The primary controller of claim 8, wherein the processor is further configured to
periodically request, through the communication unit, the monitoring information from the at least one MLPE in which the error has occurred, and
remove the error flag marked on the identification information of the at least one MLPE in which the error has occurred when the monitoring information has been received from the at least one MLPE in which the error has occurred for a second set number of times or more.

10. The primary controller of claim 7, wherein the processor is further configured to
periodically receive, through the communication unit, monitoring information from each of the plurality of MLPEs, the monitoring information including unique information of each MLPE and at least one measured value among a voltage, a current, a power generation amount, and a temperature of each of the plurality of photovoltaic panels, and
determine that the error has occurred in the at least one MLPE associated with the measured value when the measured value deviates from a preset range.

11. The primary controller of claim 7, wherein the processor is further configured to
count an error history in association with the identification information of the at least one MLPE in which the error has occurred, and
generate and output a replacement notification for the at least one MLPE in which the error has occurred when the error history exceeds a set value.

12. The primary controller of claim 7, wherein the processor is further configured to assign the identification information of the at least one MLPE marked with the error flag as identification information of a new MLPE when a registration request is received from the new MLPE.

13. A non-transitory computer-readable recording medium having recorded thereon a program for causing a computer to execute the method of any one of claims 1 to 6.
